# EUROPÄISCHE PATENTSCHRIFT

(11) **EP 2 084 897 B1**
(45) Veröffentlichungstag und Bekanntmachung des Hinweises auf die Patenterteilung: **06.03.2013**
(21) Anmeldenummer: 07818964.4
(22) Anmeldetag: 12.10.2007
(51) Int. Cl.: H04N 5/225

(54) **KAMERASYSTEM ZUM ÜBERWACHEN EINES RAUMBEREICHS**
CAMERA SYSTEM FOR MONITORING A ROOM REGION
SYSTÈME DE CAMÉRA POUR LA SURVEILLANCE D'UNE ZONE D'ESPACE

(30) Priorität: 17.10.2006 DE 102006050235
(43) Veröffentlichungstag der Anmeldung: 05.08.2009
(73) Patentinhaber: Pilz GmbH & Co. KG, 73760 Ostfildern (DE)
(72) Erfinder: WENDLER, Martin, 70599 Stuttgart (DE)
(74) Vertreter: Witte, Weller & Partner
(86) Internationale Anmeldenummer: PCT/EP2007/008893
(87) Internationale Veröffentlichungsnummer: WO 2008/046565

(56) Entgegenhaltungen:
- EP-A- 1 686 790
- US-A1- 2003 057 426
- US-A1- 2005 099 520
- US-A1- 2006 139 475

## Beschreibung

Die vorliegende Erfindung betrifft ein Kamerasystem zum Überwachen eines Raumbereichs, und insbesondere zum Absichern einer in dem Raumbereich angeordneten, automatisierten Anlage, mit zumindest einer Kameraeinheit mit einem Bildsensor und einer Anzahl von Optikelementen, die eine Abbildungsoptik darstellen, mit einem Systemkörper, der zumindest eine Aufnahme für die Kameraeinheit aufweist, und mit einem Montageteil zum Ausrichten des Systemkörpers relativ zu dem Raumbereich, wobei die Optikelemente in einem Objektivkörper angeordnet sind.

Ein derartiges Kamerasystem ist aus US 2006/0139475 A1 bekannt.

In vielen industriellen und nicht-industriellen Anwendungen werden Bewegungsabläufe und/oder Herstellungsprozesse automatisiert durchgeführt. Dabei besteht grundsätzlich das Problem, dass der automatisierte Ablauf eine Gefahr für Personen oder Gegenstände darstellen kann, die sich im Bereich der automatisierten Anlage aufhalten. Zur Absicherung verwendet man typischerweise Lichtschranken, Lichtgitter, Laserscanner sowie Schutzzäune und Schutztüren. Diese Elemente dienen dazu, den Raumbereich um die automatisierte Anlage abzusperren. Sobald eine Lichtschranke oder ein Lichtgitter durchbrochen wird oder eine Schutztür geöffnet wird, wird die gefahrbringende Bewegung der automatisierten Anlage angehalten oder die Anlage wird anderweitig in einen sicheren Zustand gebracht.

Lichtschranken, Lichtgitter, Schutztüren und Schutzzäune bieten jedoch eine begrenzte Flexibilität und erfordern einen vergleichsweise hohen Montage- und Installationsaufwand. Laserscanner sind etwas flexibler, in ihrer Fähigkeit zur Unterscheidung von gefährlichen und ungefährlichen Situationen jedoch immer noch eingeschränkt.

Es gibt daher seit einigen Jahren Bestrebungen, automatisierte Anlagen, von denen eine Gefahr ausgeht, mit Hilfe von Kamerasystemen abzusichern. DE 199 38 639 A1 beschreibt beispielsweise eine solche Vorrichtung, bei der die Kamera allerdings noch ähnlich wie bei einer Lichtschranke oder einem Lichtgitter arbeitet, indem sie ein vor der Anlage angeordnetes, bekanntes Linienmuster überwacht. Neuere Ansätze, wie sie beispielsweise in EP 1 543 270 B1 beschrieben sind, versuchen mit Hilfe des Kamerasystems ein dreidimensionales Abbild des Raumbereichs inklusive der überwachten Anlage aufzunehmen. Mit Hilfe einer geeigneten Bildauswertung lassen sich dann virtuelle Schutzzäune um die Anlage flexibel definieren.

Solche Ansätze stellen allerdings hohe Anforderungen an die Auflösung und Genauigkeit der dreidimensionalen Bildaufnahme. Darüber hinaus muss die Eigenfehlersicherheit des Kamerasystems gewährleistet sein, d.h. die Sicherheitsfunktion darf auch unter ungünstigen Betriebsbedingungen und/oder bei Funktionsfehlern des Kamerasystems nicht verloren gehen.

DE 10 2004 020 998 A1 beschreibt eine gattungsgemäße Vorrichtung und insbesondere eine bevorzugte Abbildungsoptik für ein solches sicherheitsgerichtetes Kamerasystem. Diese Druckschrift enthält allerdings noch keine Vorschläge für einen stabilen und zuverlässigen mechanischen Aufbau eines solchen Kamerasystems, der die erforderliche Funktionssicherheit gewährleistet und zudem eine kostengünstige Montage ermöglicht.

Mechanische Konzepte zum Aufbau von Kameras gibt es natürlich auf anderen Anwendungsgebieten. Beispielsweise sei auf US 2003/0025826 A1 und auf JP 2000-089 122 verwiesen. Diese Druckschriften enthalten Vorschläge für den mechanischen Aufbau von miniaturisierten Kameras, wie sie für Anwendungen in Mobiltelefonen, Personalcomputern, in Kraftfahrzeugen oder als Türspione eingesetzt werden. Diese Kamerasysteme sind jedoch weder in der Lage noch dazu vorgesehen, ein dreidimensionales Abbild eines Raumbereichs aufzunehmen, um in Abhängigkeit davon eine gefährliche Anlage abzusichern. Insbesondere enthalten diese Druckschriften keine Vorschläge, um mehrere Kameras auf kostengünstige Weise und mit höchster Genauigkeit zu einem Stereo-Kamerasystem zu integrieren. Bei einem Stereo-Kamerasystem werden zwei oder mehr Kameras verwendet, um mit Hilfe einer Stereobildauswertung ein dreidimensionales Abbild des betrachteten Raumbereichs zu erzeugen. Hierzu müssen die zumindest zwei Kameras sehr exakt zueinander positioniert sein.

US 2005/0099520 A1 beschreibt den Aufbau einer Kamera, die einen Kamerakörper aufweist. An dem Kamerakörper ist ein Objektivkörper mittels eines Stellrads befestigt. Zu diesem Zweck weist der Kamerakörper ein Innengewinde auf, das mit einem Außengewinde des Stellrads zusammenwirkt. Das Stellrad weist konzentrisch zu dem Außengewinde einen Durchbruch auf, innerhalb dessen ein weiteres Innengewinde vorgesehen ist, das mit einem Außengewinde des Objektivkörpers zusammenwirkt. Auf diese Weise kann durch Verdrehen des Stellrades ein Abstand zwischen dem Objektivträger und dem Bildsensor mittels der Gewinde eingestellt werden. Zur Sicherung des Stellrads vor nicht vorhergesehener Betätigung ist der Kamerakörper mit einer Ausnehmung versehen, die sich radial um das Stellrad herum erstreckt und zwei seitliche Durchbrüche aufweist, die eine Betätigung des Stellrads ermöglichen.

US 2003/0057426A1 beschreibt eine miniaturisierte Kameraeinheit. Diese besteht im Wesentlichen aus drei Baugruppen, die zu der Kameraeinheit zusammengefügt werden. Die erste Baugruppe besteht aus einer Platine mit elektrischen Anschlüssen, auf die die zweite Baugruppe aufgebracht wird. Die zweite Baugruppe weist einen Bildsensor auf, der in der zweiten Baugruppe gekapselt angeordnet ist. Die zweite Baugruppe weist zudem eine Vielzahl von Kontaktdrähten auf, welche im zusammengebauten Zustand die Kontakte der ersten Baugruppe mit dem Bildsensor verbinden. Die dritte Baugruppe weist einen Objektivkörper auf, der auf einem Trägerelement aufgebracht ist. Das Trägerelement wird für den Zusammenbau der Kameraeinheit auf die zweite Baugruppe aufgesteckt. Hierfür sind konische Zapfen an dem Trägerelement vorgesehen, die mit entsprechenden Durchbrüchen in der zweiten Baugruppe zusammenwirken, um eine möglichst genaue Ausrichtung zu erreichen.

EP 1 686 790 A1 beschreibt ein kompaktes Kameramodul, welches im Wesentlichen aus zwei Baugruppen besteht. Die erste Baugruppe weist eine Trägerplatte auf, auf der ein gekapselter Bildsensor angeordnet ist. Auf der ersten Baugruppe kann die zweite Baugruppe befestigt werden, die einen Objektivkörper darstellt. Für einen Einsatz der Kamera ist vorgesehen, dass die gesamte Kameraeinheit auf der Seite der Trägerplatte mit einer Platine verbunden wird.

Die eingangs genannte US 2006/0139475 A1 beschreibt eine Vorrichtung, die eine Mehrzahl an Kameraeinheiten aufweist. Die Kameraeinheiten sind gemeinsam auf einer Trägerplatte. matrixartig angeordnet. Zum Zwecke der Befestigung sind die Kameraeinheiten auf der Seite ihrer Bildsensoren mit der Trägerplatte verbunden. Die Trägerplatte kann im Gesamten bewegt und verschwenkt werden, um die Kameras auszurichten.

Vor diesem Hintergrund ist es eine Aufgabe der vorliegenden Erfindung, ein Mechanikkonzept anzugeben, das eine einfache und kostengünstige Montage eines Kamerasystems der eingangs beschriebenen Art ermöglicht. Es ist insbesondere eine Aufgabe, ein Mechanikkonzept anzugeben, das eine kostengünstige und trotzdem zuverlässige Montage eines Stereo-Kamerasystems ermöglicht.

Gemäß einem Aspekt der Erfindung wird diese Aufgabe durch ein Kamerasystem der eingangs genannten Art gelöst, wobei der Objektivkörper einen Montageflansch aufweist, und wobei die Kameraeinheit mit Hilfe des Montageflansches in der Aufnahme befestigt ist. Vorzugsweise sind die Aufnahme und der Montageflansch hierbei zumindest abschnittsweise komplementär geformt, so dass der Objektivkörper formschlüssig in der Aufnahme des Systemkörpers gehalten ist.

Bei diesem Kamerasystem wird die Kameraeinheit, die im Wesentlichen den Bildsensor (mit einer Vielzahl von Bildpunkten) und die Optikelemente beinhaltet, mit ihrem bzw. an ihrem Objektiv an dem Systemkörper befestigt. Das Objektiv besteht aus den Optikelementen und dem Objektivkörper, in dem die Optikelemente befestigt sind. Dadurch, dass der Objektivkörper einen Montageflansch aufweist, der an die Aufnahme des Systemkörpers angepasst ist, wird die Abbildungsoptik der Kameraeinheit bei der Montage am Systemkörper ausgerichtet. Eine zumindest abschnittsweise komplementäre Ausbildung von Aufnahme und Montageflansch ermöglicht dabei eine hohe Genauigkeit.

Diese Vorgehensweise ist besonders vorteilhaft, wenn mehrere, vorzugsweise gleichartige, Kameraeinheiten an einem gemeinsamen, einstückigen Systemkörper befestigt werden, weil die Abbildungsoptiken der verschiedenen Kameras auf diese Weise mit einer hohen Präzision zueinander ausgerichtet werden können, ohne dass eine aufwändige Nachjustierung erforderlich ist. Mit anderen Worten hängen die Montagetoleranzen bei dem neuen Kamerasystem im Wesentlichen von der Präzision ab, mit der die Aufnahme des Systemkörpers und der Montageflansch an dem Objektivkörper gefertigt werden können. Da sowohl der Systemkörper als auch der Objektivkörper in bevorzugten Ausgestaltungen der Erfindung aus formstabilen, CNC-bearbeiteten Materialien, insbesondere Metall, hergestellt sind, lassen sich Abbildungsoptiken mehrerer Kameraeinheiten sehr exakt zueinander ausrichten, insbesondere parallel zueinander. Grundsätzlich kann die vorliegende Erfindung jedoch auch bei Kamerasystemen angewendet werden, die lediglich eine Kameraeinheit besitzen, insbesondere eine Kameraeinheit, die durch eine Laufzeitmessung von Lichtsignalen eine zusatzliche Entfernungsmessung zu Objektn im Raumberelth ermöglicht.

Typischerweise wird bei der konventionellen Montage eines Kamerasystems die Abbildungsoptik zu dem Bildsensor ausgerichtet. Hier ist es eher umgekehrt. Die Abbildungsoptik stellt über den Montageflansch am Objektivkörper eine exakt definierte Verbindung zu dem Systemkörper her. Die Montage des Bildsensors orientiert sich an der zugehörigen Abbildungsoptik.

Die neue Vorgehensweise besitzt den weiteren Vorteil, dass eine Kameraeinheit inklusive Abbildungsoptik relativ einfach und in bevorzugten Ausführungen ohne besonderen Justageaufwand ausgetauscht werden kann, weil die Ausrichtung der Austauscheinheit im Wesentlichen nur von den Herstellungstoleranzen des Montageflansches abhängt, die bei einem CNC-bearbeiteten, metallischen oder metallhaltigen Objektivkörper sehr gering gehalten werden können.

Die oben genannte Aufgabe ist daher vollständig gelöst.

In einer bevorzugten Ausgestaltung weist die Kameraeinheit einen Bauteilträger auf, auf dem der Bildsensor befestigt ist, wobei der Bauteilträger über zumindest einen konischen Passzapfen an dem Objektivkörper befestigt ist. Vorzugsweise besitzt der zumindest eine konische Passzapfen an seinem unteren Ende einen Auflageflansch, gegen den der Bauteilträger im montierten Zustand gepresst ist. Vorteilhafterweise ist der Bauteilträger über drei konische Passzapfen an dem Objektivkörper befestigt. Außerdem ist es bevorzugt, wenn der Bauteilträger Bohrungen aufweist, deren Ränder auf dem Auflageflansch aufliegen und in die die Passzapfen mit einem Übermaß eingreifen. Der oder die Passzapfen sind in diesem Fall an dem Objektivkörper angeordnet.

Diese bevorzugten Ausgestaltungen vereinfachen die Montage des Bildsensors und des Objektivkörpers noch weiter und sie ermöglichen eine besonders hohe Genauigkeit beim Ausrichten des Bildsensors zur Abbildungsoptik. Konische Passzapfen können durch eine bevorzugte CNC-Bearbeitung mit hoher Genauigkeit und geringen Fertigungstoleranzen aus einem formstabilen Material, vorzugsweise Metall, hergestellt werden. Die Verwendung von drei Passzapfen, die in drei entsprechende Bohrungen am Bauteilträger eingreifen, mittelt etwaige Montagetoleranzen noch weiter aus. Die Realisierung der Passzapfen mit einem Übermaß und einem Auflageflansch, gegen den der Bauteilträger gepresst wird (beispielsweise mit Schrauben), führt zu einer sehr exakt definierten Lage, die eine hohe Reproduzierbarkeit ohne Justageaufwand und eine sehr stabile und erschütterungsfeste Lagerung ermöglicht. Die Anordnung der Passzapfen an dem Objektivkörper ist bevorzugt, weil der Bauteilträger für den Bildsensor dann kostengünstiger realisiert werden kann.

In einer weiteren Ausgestaltung ist der Bildsensor ("Chip") ohne Sensorgehäuse direkt auf den Bauteilträger gebondet.

Diese Ausgestaltung besitzt den Vorteil, dass die wichtige aktive Pixelfläche des Bildsensors exakt zu der Abbildungsoptik der Kameraeinheit ausgerichtet ist. Montagetoleranzen zwischen dem Bildsensor und einem (hier nicht vorhandenen) Sensorgehäuse werden vermieden. Vorteilhafterweise ist der Bildsensor hier direkt zu den Bohrungen auf dem Bauteilträger, nicht zu irgendwelchen gesonderten Passmarken ausgerichtet, da der Einfluss von Fertigungstoleranzen auf die Ausrichtung so noch weiter reduziert wird.

In einer weiteren Ausgestaltung bilden der Bauteilträger und der Objektivkörper eine staubdichte Umhäusung für den Bildsensor.

Diese Ausgestaltung schließt nicht aus, dass die Umhäusung ergänzend noch eine oder mehrere Dichtungen, insbesondere in Form von O-Ringen, oder noch ein weiteres Montageelement, wie der nachfolgend beschriebene Trägerring, beinhaltet. Sie besitzt den Vorteil, dass die aktive Fläche des Bildsensors vor Umgebungseinflüssen geschützt ist, selbst wenn der Bildsensor ohne Sensorgehäuse ausgebildet ist. Außerdem ergibt sich eine kleine und kompakte Kameraeinheit, die besonders einfach und kostengünstig an dem Systemkörper befestigt werden, was auch einen späteren Austausch einer defekten Kameraeinheit erleichtert.

In einer weiteren Ausgestaltung beinhaltet das Kamerasystem einen Trägerring, an dem der zumindest eine konische Passzapfen angeordnet ist, wobei der Objektivkörper an dem Trägerring passgenau befestigt ist. Vorzugsweise ist der zumindest eine konische Passzapfen einstückig mit dem Trägerring ausgebildet, was die Genauigkeit bei der Montage weiter erhöht. Des Weiteren ist es in den derzeitigen Ausgestaltungen bevorzugt, wenn der Objektivkörper direkt auf den Trägerring aufgeschraubt ist. Der Objektivkörper und der Trägerring weisen dabei jeweils ein Gewinde auf, und die Gewinde liegen konzentrisch zueinander und greifen ineinander ein.

Diese Ausgestaltungen ermöglichen eine einfache axiale Verstellung des Objektivkörpers relativ zu dem Bildsensor und damit eine einfache Fokussierung. Darüber hinaus bietet eine direkte Verschraubung eine sehr exakte und stabile Verbindung zwischen dem Trägerring und dem Objektivkörper.

In einer weiteren Ausgestaltung ist der Montageflansch einstückig an dem Objektivkörper ausgebildet. Vorzugsweise ist der Objektivkörper rotationssymmetrisch, so dass er als Drehteil in einer einzigen Aufspannung hergestellt werden kann. Dementsprechend ist es bevorzugt, wenn der Montageflansch die Aufnahme für die Optikelemente in etwa konzentrisch umgibt.

Diese Ausgestaltungen ermöglichen eine besonders einfache und kostengünstige Herstellung des Objektivkörpers. Sie tragen darüber hinaus zu einer weiteren Reduzierung von Montagetoleranzen bei.

In einer weiteren Ausgestaltung weist die Abbildungsoptik eine Eintrittspupille auf, und der Objektivkörper besitzt eine vom Bildsensor abgewandte Außenseite, die in etwa plan zu der Eintrittspupille liegt.

In dieser Ausgestaltung bildet die Außenseite des Objektivkörpers eine Systemblende, die in etwa plan zu der Eintrittspupille liegt. Eine solche Abbildungsoptik ist für ein Kamerasystem der eingangs beschriebenen Art von großem Vorteil, weil sich Verschmutzungen der Kameraoptik, die die Erkennungssicherheit gefährden, gut beherrschen lassen. Insbesondere besitzt eine solche Abbildungsoptik den Vorteil, dass eine singuläre Verschmutzung der Kameraoptik nicht zu einer singulären Abschattung des Bildsensors führt.

Bevorzugt liegt die Außenseite des Objektivkörpers konzentrisch zu der Eintrittspupille und sie ist um ein Vielfaches (Faktor 10 und höher) größer als die Eintrittsöffung der Abbildungsoptik, so dass die Außenseite einen Teil der "Außenwand" des Kamerasystems bildet. Diese Ausgestaltung ermöglicht einen großen Blickwinkel und eine leichte Reinigung der Abbildungsoptik.

In einer weiteren Ausgestaltung weist der Systemkörper zumindest zwei Aufnahmen für zumindest eine erste und eine zweite Kameraeinheit auf, wobei die zumindest zwei Aufnahmen in einer definierten Position und Ausrichtung zueinander angeordnet sind. Vorzugsweise ist der Systemkörper eine weitgehend ebene Platte, in der die zumindest zwei Aufnahmen in einer gemeinsamen Ebene und in einem definierten Abstand voneinander liegen.

Diese Ausgestaltung ist besonders bevorzugt für ein stereoskopisch arbeitendes Kamerasystem. Sie kann jedoch auch für Kamerasysteme verwendet werden, bei denen mehrere Kameraeinheiten aus Gründen der Redundanz verwendet werden. In dieser Ausgestaltung hängt die Genauigkeit, mit der die zumindest zwei Kameraeinheiten zueinander positioniert und ausgerichtet sind, von der Fertigungsgenauigkeit des Systemkörpers ab. Durch moderne CNC-Fertigungstechniken lassen sich sehr hohe Maßhaltigkeiten erreichen, so dass die zumindest zwei Kameraeinheiten sehr kostengünstig und mit einer hohen Präzision zueinander montiert werden können.

Die Ausbildung des Systemkörpers als weitgehend ebene Platte besitzt den Vorteil, dass die von den zumindest zwei Kameraeinheiten aufgenommenen Bilder einfach ineinander umgerechnet werden können. Grundsätzlich ist es jedoch auch denkbar, die zumindest zwei Kameraeinheiten in einem definierten Winkel zueinander auszurichten.

In einer weiteren Ausgestaltung weist der Systemkörper eine Passaufnahme zur lösbaren Befestigung des Montageteils auf. Vorzugsweise handelt es sich bei dem Montageteil um einen Gelenkarm, der in zumindest einer Achse verstellbar ist und der ein Befestigungselement zum Anbringen des Kamerasystems an einer Gebäudewand oder -decke, einer Säule, einem Mast oder dergleichen besitzt.

Die lösbare Befestigung des Montageteils an dem Systemkörper ermöglicht sehr einen einfachen und kostengünstigen Austausch des Kamerasystems ohne einer erneute mechanische Ausrichtung.

In einer weiteren Ausgestaltung ist die Passaufnahme eine Ausnehmung mit einer umlaufenden Innenkante, wobei entlang der Innenkante zumindest drei Passflächen angeordnet sind, die in einer definierten und vorzugsweise unveränderlichen Position und Ausrichtung zu der zumindest einen Aufnahme für die Kameraeinheit liegen.

Die Verwendung von zumindest drei separaten Passflächen entlang einer umlaufenden Innenkante ermöglicht eine sehr exakt definierte Verbindung des lösbaren Montageteils mit dem Systemkörper. Da die zumindest drei Passflächen außerdem in einer exakten Position und Ausrichtung zu der Aufnahme für die Kameraeinheit liegen, wird eine exakte Ausrichtung der Kameraeinheit(en) allein durch die mechanische Verbindung zwischen dem Systemkörper und dem Montageteil erreicht. Diese Ausgestaltung trägt in Verbindung mit den bereits zuvor beschriebenen Ausgestaltungen dazu bei, dass das neue Kamerasystem - selbst wenn es sich um ein stereoskopisches Kamerasystem mit mehreren Kameraeinheiten handelt - ohne größeren Justieraufwand montiert und gegebenenfalls ausgetauscht werden kann.

In einer weiteren Ausgestaltung ist die zumindest eine Aufnahme für die Kameraeinheit integral in dem Systemkörper ausgebildet.

In dieser Ausgestaltung ist der Systemkörper einstückig mit der zumindest einen Aufnahme ausgebildet. Diese Ausgestaltung trägt vorteilhaft dazu bei, Montagetoleranzen weiter zu eliminieren. Die Präzision bei der Ausrichtung der Kameraeinheit wird noch höher.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte Darstellung einer Sicherheitsvorrichtung mit einem Kamerasystem nach der vorliegenden Erfindung,
- Fig. 2: eine perspektivische Darstellung von schräg unten auf ein bevorzugtes Ausführungsbeispiel des neuen Kamerasystems,
- Fig. 3: eine perspektivische Darstellung auf das Kamerasystem aus Fig. 2, hier jedoch von schräg oben,
- Fig. 4: den Systemkörper aus dem Kamerasystem der Figuren 2 und 3 mit zwei von insgesamt drei Kameraeinheiten,
- Fig. 5: einen seitlichen Querschnitt durch eine Kameraeinheit aus dem Kamerasystem der Figuren 2 bis 4, und
- Fig. 6: eine vereinfachte Darstellung einer Abbildungsoptik für eine Kameraeinheit gemäß Fig. 5 inklusive einer symbolischen Darstellung der optisch wirksamen Eintrittspupille.

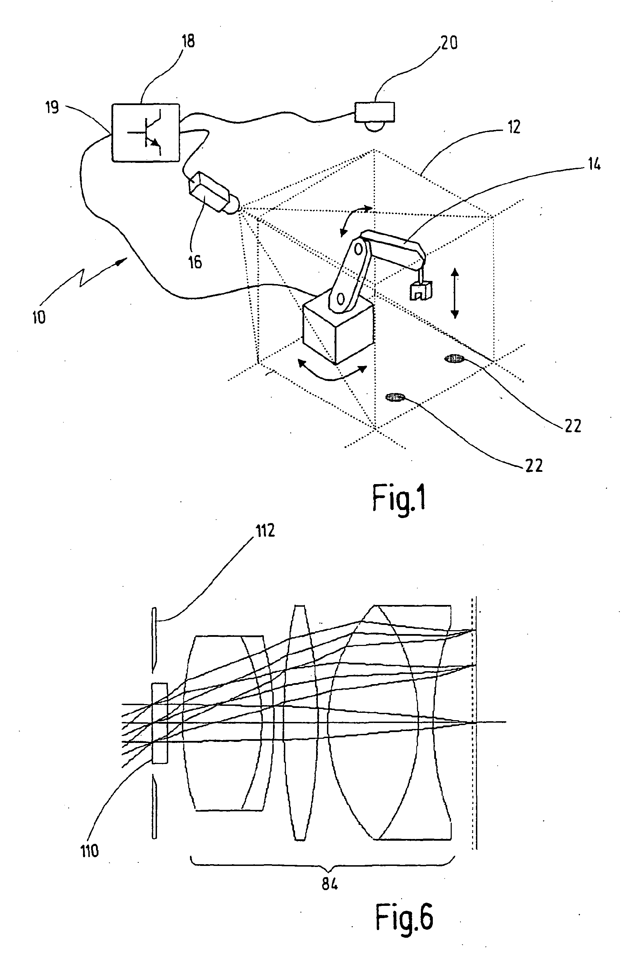

In Fig. 1 ist eine Vorrichtung zum Absichern einer automatisiert arbeitenden Anlage in ihrer Gesamtheit mit der Bezugsziffer 10 bezeichnet. Die Vorrichtung 10 überwacht einen Raumbereich 12, in dem die automatisiert arbeitende Anlage, hier ein Roboter 14, angeordnet ist. Zu diesem Zweck beinhaltet die Vorrichtung 10 ein Kamerasystem 16, das auf den Raumbereich 12 ausgerichtet ist. Das Kamerasystem 16 ist mit einer Steuerung 18 verbunden. Die Steuerung 18 ist dazu ausgebildet, die mit dem Kamerasystem 16 aufgenommenen Bilder des Raumbereichs 12 auszuwerten und in Abhängigkeit davon den Roboter 14 stillzusetzen, wenn eine gefährliche Situation erkannt wird. Abweichend von der Darstellung in Fig. 1 können das Kamerasystem 16 und die Steuerung 18 auch in einem gemeinsamen Gehäuse integriert sein, wobei die Steuerung 18 dann anhand der Kamerabilder ein Schaltsignal zum Abschalten der Anlage 14 erzeugt und an einem Ausgang 19 bereitstellt.

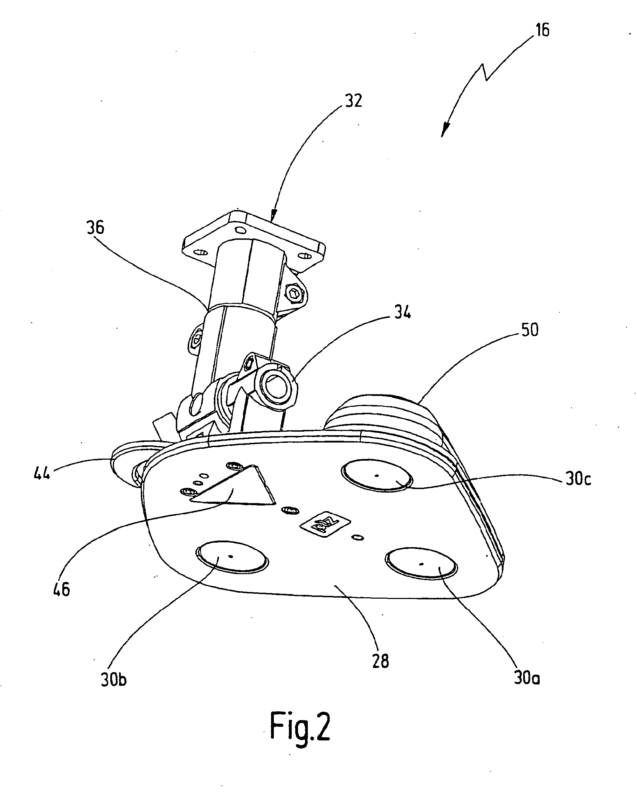

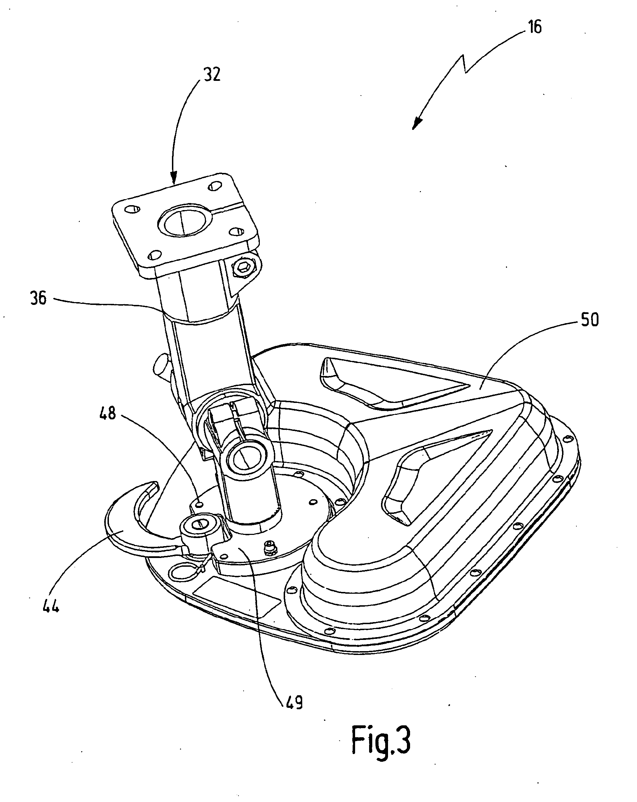

Mit der Bezugsziffer 20 ist eine Lichtquelle bezeichnet, die optional dazu vorgesehen sein kann, den Raumbereich 12 zu beleuchten. In manchen Ausführungsbeispielen der Erfindung kann die Lichtquelle 20 dazu dienen, Lichtsignale zu erzeugen, aus deren Laufzeit die Entfernung zu Objekten im Raumbereich 12 ermittelt werden kann. In den derzeit bevorzugten Ausführungsbeispielen dient die Lichtquelle 20 jedoch lediglich zur Beleuchtung des Raumbereichs 12. Eine dreidimensionale Erfassung des Raumbereichs 12 erfolgt mit Hilfe einer stereoskopischen Bildaufnahme. Dementsprechend besitzt das Kamerasystem 16 in den derzeit bevorzugten Ausführungsbeispielen zumindest zwei Kameraeinheiten, wie nachfolgend anhand der Figuren 2 bis 4 erläutert ist.

Mit der Bezugsziffer 22 sind zwei Referenzmarken bezeichnet, die in dem beobachteten Raumbereich 12 angeordnet sind. Die Referenzmarken 22 dienen in bevorzugten Ausführungsbeispielen dazu, die korrekte Ausrichtung des Kamerasystems 12 im laufenden Betrieb zu überwachen.

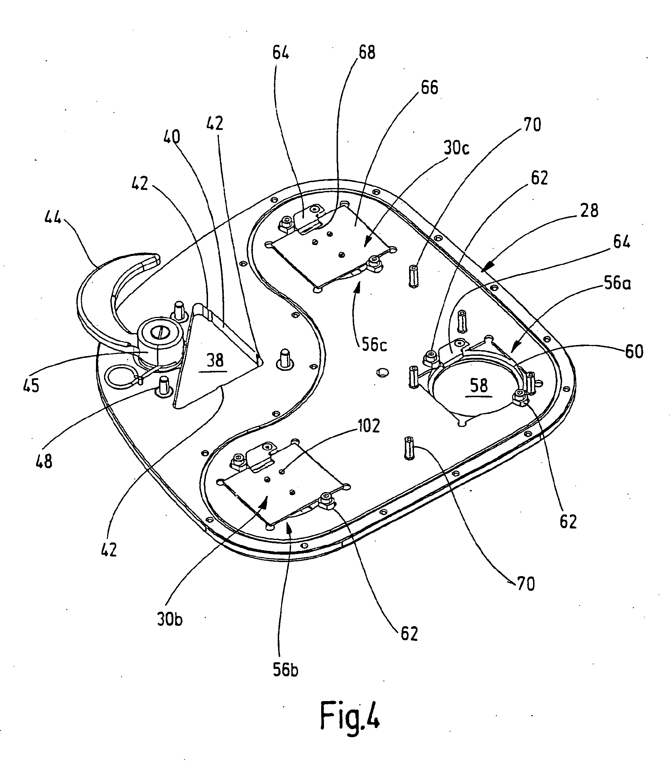

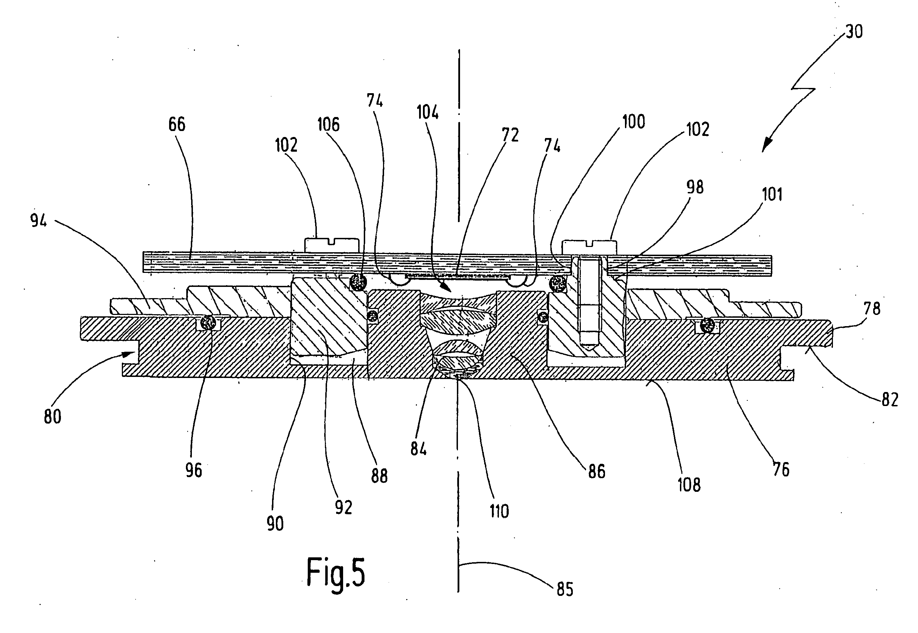

Ein bevorzugtes Ausführungsbeispiel des Kamerasystems 16 ist in den Figuren 2 bis 4 dargestellt. Das Kamerasystem 16 besitzt hier einen Systemkörper 28 (Fig. 4) in Form einer weitgehend ebenen Platte. Die Platte 28 hat hier eine in etwa rautenförmige Grundfläche. In drei der vier "Ecken" des Systemkörpers 28 sind insgesamt drei Kameraeinheiten 30a, 30b, 30c angeordnet, deren Aufbau im Einzelnen weiter unten anhand Fig. 5 noch näher beschrieben wird. Die Befestigung der Kameraeinheiten 30 an dem Systemkörper 28 wird weiter unten anhand Fig. 4 erläutert.

Mit der Bezugsziffer 32 ist ein Montageteil bezeichnet, mit dessen Hilfe das Kamerasystem 16 an einer Wand, einem Mast oder dergleichen (hier nicht dargestellt) befestigt werden kann. Das Montageteil 32 ist hier ein Montagearm mit mehreren Drehgelenken 34, 36, die eine Verschwenkung des Systemkörpers 28 um zumindest zwei zueinander orthogonale Drehachsen ermöglichen. Zur Befestigung des Montageteils 32 mit dem Systemkörper 16 besitzt der Systemkörper 16 eine Passaufnahme 38 (siehe Fig. 4). Die Passaufnahme 38 ist hier eine annähernd dreieckige Öffnung oder Ausnehmung mit einer umlaufenden Innenkante 40. Entlang der Innenkante 40 sind drei separate Passflächen 42 ausgebildet, die nicht auf einer Geraden liegen. Jede Passfläche 42 ist hier in Form einer stufenartigen Erhöhung entlang der Innenkante 40 ausgebildet.

Mit der Bezugsziffer 44 ist ein Griff bezeichnet, der an einem Exzenterelement 45 angeordnet ist. Mit Hilfe des Exzenterelements 45 kann ein Gegenstück 46 am unteren freien Ende des Montagearms 32 in der Passaufnahme 38 fixiert werden. Durch die Passflächen 42 wird das Gegenstück 46 in eine exakt definierte Position zu dem Systemkörper 28 gebracht. Zusätzlich sind an dem Systemkörper 28 noch drei Schrauben 48 angeordnet, die um die dreieckige Passaufnahme 38 herum verteilt sind. Die Schrauben 48 greifen in entsprechende Gewindebohrungen am Fuß 49 des Montageteils 32 und ziehen den Fuß des Montageteils 32 gegen die obere Planfläche des Systemkörpers 28. Insgesamt wird mit Hilfe der Passaufnahme 38, der Passflächen 42, dem Gegenstück 46, den Schrauben 48 und den Planflächen am Fuß 49 und dem Systemkörper 28 eine stabile, jedoch leicht lösbare Verbindung zwischen dem Systemkörper 28 und dem Montageteil 32 erreicht, wobei die relative Position von Systemkörper 28 und Montageteil 32 zueinander hier mit einer sehr hohen Genauigkeit reproduzierbar ist.

Mit der Bezugsziffer 50 ist eine Haube bezeichnet, die auf der Rückseite des Systemkörpers 28 angeordnet ist. Die Haube 50 schützt die Kameraeinheiten 30a, 30b, 30c sowie weitere Elektronikkomponenten, indem sie zusammen mit dem Systemkörper 28 ein Gehäuse für diese Komponenten bildet.

Wie in Fig. 4 dargestellt ist, besitzt der Systemkörper 28 in diesem Ausführungsbeispiel drei Aufnahmen 56, in die jeweils eine Kameraeinheit 30 eingesetzt werden kann. Die Aufnahmen 56 sind in Form einer Durchgangsöffnung 58 realisiert, die ein gestuftes Randprofil 60 besitzt. In dem bevorzugten Ausführungsbeispiel handelt es sich um kreisförmige Durchgangsöffnungen 58 mit einem geschlossenen, kreisförmig umlaufenden Randprofil 60. Der Innendurchmesser der Durchgangsöffnung 58 ist auf der Rückseite des Systemkörpers 28 (die obere Seite in der Draufsicht in Fig. 4) größer als auf der entgegenliegenden Vorderseite des Systemkörpers 28. Damit bildet das gestufte Randprofil 60 einen kreisförmig umlaufenden Flansch, an den eine Kameraeinheit 30 mit einem entsprechenden Gegenflansch von der Rückseite des Systemkörpers 28 her angelegt werden kann.

Auf gegenüberliegenden Seiten des Randprofils 60 sind Klemmstücke 62, 64 angeordnet, mit denen eine eingesetzte Kameraeinheit (Kameraeinheiten 30b, 30c in Fig. 4) in der Aufnahme 56 festgeklemmt werden kann. In dem bevorzugten Ausführungsbeispiel greifen die Klemmstücke 62 , 64 an der Rückseite eines Montageflansches an, der weiter unten anhand Fig. 5 noch näher beschrieben wird. Das Klemmstück 64 greift dabei in eine Ausnehmung 68 am Bauteilträger 66, wodurch zusätzlich auch die Drehposition jeder Kameraeinheit 30 innerhalb der Aufnahme 56 eindeutig festgelegt ist.

Der Systemkörper 28 besitzt in diesem Ausführungsbeispiel insgesamt drei Aufnahmen 56, die ein Dreieck in der Ebene des Systemkörpers 28 aufspannen. Die Entfernung der Aufnahmen 56a, 56b voneinander und die Entfernung der Aufnahmen 56a, 56c voneinander sind in diesem Ausführungsbeispiel jeweils exakt gleich und unveränderlich. Diese beiden Entfernungen bilden jeweils eine Basisweite für eine stereoskopische Auswertung der Kamerapaare 30a, 30b und 30a, 30c. Prinzipiell könnte darüber hinaus auch das Kamerapaar 30b, 30c für eine separate stereoskopische Auswertung verwendet werden. Dadurch, dass die beiden stereoskopischen Kamerapaare 30a, 30b und 30a, 30c nicht entlang einer gemeinsamen Geraden angeordnet sind, lassen sich auch Objekte in dem Raumbereich 12 detektieren, die für ein einzelnes Kamerapaar nicht sichtbar sind, beispielsweise aufgrund von Abschattung durch andere Objekte. Außerdem wird mit Hilfe der drei Kameraeinheiten sichergestellt, dass die Entfernung zu beliebigen Objekten im Raumbereich bestimmt werden kann. Wenn lediglich zwei Kameraeinheiten verwendet würden, könnte die Entfernung zu einer parallel zur Basisweite verlaufenden, langgestreckten Kontur möglicherweise nicht bestimmt werden.

In Fig. 5 ist der mechanische Aufbau der Kameraeinheiten 30 im Querschnitt dargestellt. Jede Kameraeinheit 30 besitzt einen Bildsensor 72 mit einer Vielzahl von matrixartig zueinander angeordneten Bildpunkten. In bevorzugten Ausführungsbeispielen der Erfindung handelt es sich um einen CMOS-Bildsensor, wie er in DE 01 2004 020 331 C1 beschrieben ist. Der Bildsensor 72 ist auf der Unterseite des Bauteilträgers 66 angeordnet. In bevorzugten Ausführungsbeispielen ist der Bildsensor 72 ohne eigenes Sensorgehäuse direkt auf den Bauteilträger 66 gebondet. Entsprechende Bonddrähte sind bei der Bezugsziffer 74 dargestellt. Der Halbleiterchip mit dem Bildsensor 72 ist also gewissermaßen "nackt" auf dem Bauteilträger 66 befestigt.

Mit der Bezugsziffer 76 ist ein Objektivkörper bezeichnet, der einen umlaufenden Montageflansch 78 aufweist. Die Klemmstücke 62, 64 drücken den Montageflansch 78 von seiner in Fig. 5 obenliegenden Rückseite her in die Aufnahme 56.

In dem bevorzugten Ausführungsbeispiel ist der Objektivkörper 76 ein rotationssymmetrisches Drehteil, und der Montageflansch 78 ist ein nach außen weisender, umlaufender Flansch, der den maximalen Außendurchmesser des Objektivkörpers 76 bestimmt. Grundsätzlich könnte der Objektivkörper 76 jedoch auch eine eckige Grundform besitzen.

Unterhalb des Montageflansches 78 befindet sich eine umlaufende Ringnut 80. Diese Ringnut 80 dient zur Aufnahme eines O-Rings (hier nicht dargestellt) beim Einsetzen der Kameraeinheit 30 in die Aufnahme 56 am Systemkörper 28. Dabei liegt die in Fig. 5 nach unten weisende Ringfläche 82 des Montageflansches 78 an einer entsprechenden Gegenfläche des Randprofils 60 an.

Konzentrisch zur Längsmittelachse des Objektivkörpers 78 befinden sich Aufnahmen für Optikelemente 84. Mit anderen Worten hält der Objektivkörper 78 die Optikelemente 84 der Abbildungsoptik so, dass die optische Achse 85 identisch zu der Längsmittelachse des Objektivkörpers 78 ist. Dabei sind die Optikelemente 84 in einem zentralen Ringteil 86 angeordnet, das von einem Ringspalt 88 konzentrisch umgeben ist. Die radiale Außenseite 90 des Ringspaltes 88 besitzt ein Gewinde (hier nicht dargestellt), mit dessen Hilfe der Objektivkörper 78 auf einen Trägerring 92 aufgeschraubt ist. Mit der Bezugsziffer 94 ist eine Kontermutter bezeichnet, die oberhalb des Objektivkörpers 78 (also zwischen dem Objektivkörper 78 und dem Bauteilträger 66) auf das Außengewinde des Trägerrings 92 aufgeschraubt ist. Mit der Kontermutter 94 wird die axiale Verstellposition des Objektivkörpers 78 relativ zu dem Bauteilträger 66 und dem Bildsensor 72 fixiert. Zwischen dem Objektivkörper 78 und der Kontermutter 94 ist ein O-Ring 96 angeordnet, um eine spielfreie Vorspannung zu erreichen.

Der Objektivkörper 78 bildet zusammen mit den Optikelementen 84 das Objektiv der Kameraeinheit 30. Dieses Objektiv ist über den Trägerring 92 mit dem Bauteilträger 66 verbunden. Zu diesem Zweck weist der Trägerring 92 drei konische Passzapfen 98 auf, die in entsprechende Bohrungen 100 im Bauteilträger 66 eingreifen. Die Passzapfen 98 haben in diesem Ausführungsbeispiel einen ringförmigen Auflageflansch 101, auf dem der Randbereich jeder Bohrung 100 aufliegt. Dabei wird der Bauteilträger mit schnauben 102 gegen den Auflageftansch 101 gepresst. Zusatzhnch naben die Konischen Passzapfen 98 hier im Bereich des Auflageflansches 101 ein Übermaß bezogen schen Passzapfen 98 hier im Bereich des Auflageflansches 101 ein Übermaß bezogen auf den Innendurchmesser der Bohrungen 66, so dass die Zapfen 98 in die Bohrungen 100 eingepresst sind. Mit anderen Worten ist der Außendurchmesser jedes Passzapfens 98 im Bereich oberhalb des Auflageflansches 101 geringfügig größer als der Innendurchmesser jeder Bohrung 66. Hierdurch entsteht eine formschlüssige und besonders schockfeste Verbindung.

Wie in der Draufsicht auf die Kameraeinheiten 30b, 30c in Fig. 4 zu erkennen ist, sind die Schrauben 102 und die entsprechenden Passzapfen 98 so angeordnet, dass sie ein gleichseitiges Dreieck aufspannen, in dessen Zentrum der Bildsensor 72 angeordnet ist. In den bevorzugten Ausführungsbeispielen ist der Bildsensor 72 auf dem Bauteilträger 66 zu den Bohrungen 100 ausgerichtet (nicht zu etwaigen Markierungen), um Montagetoleranzen weiter zu minimieren. Dadurch, dass die drei Bohrungen 100 den Bildsensor 72 umgeben und dass die Passzapfen 98 aufgrund ihres Außenkonus mit Übermaß eine Zentrierung bewirken, werden Montagetoleranzen nahezu eliminiert.

Der Bauteilträger 66 und der Objektivkörper 78 bilden einen Innenraum 104 aus, der mit Hilfe eines weiteren O-Rings 106 staubdicht nach außen abgeschlossen ist. In bevorzugten Ausführungsbeispielen liegt der O-Ring 106 auf einer kreisringförmigen Kupferfläche (hier nicht dargestellt) auf, die auf der Unterseite des Bauteilträgers 66 um den Bildsensor 72 herum angeordnet ist. Des Weiteren wird der O-Ring 106 in einem stufenartigen Ringprofil des Trägerrings 92 gehalten. Hierdurch wird eine besonders dichte und schockfeste Umhäusung des Bildsensors 72 erreicht.

Da die Kameraeinheit 30 über den Montageflansch 78 an dem Systemkörper 28 befestigt wird, bildet die vom Bauteilträger 66 abgewandte Stirnfläche 108 des Objektivkörpers 76 einen Teil der Vorderseite des Kamerasystems 16. Mit anderen Worten ist die Außenseite 108 des Objektivkörpers 76 in der Aufnahme 56 weitgehend sichtbar. Im Zentrum der Außenseite 108 befindet sich die vordere Glasfläche 110 der Abbildungsoptik. Diese vordere Glasfläche 110 liegt plan zu der Außenseite 108, um eine leichte Reinigung der Abbildungsoptik zu ermöglichen. Darüber hinaus ist die vordere Glasfläche 110 um ein Vielfaches kleiner als die konzentrisch dazu liegende Außenseite 108 des Objektivkörpers 76. Außerdem liegt die Eintrittspupille 112 der Abbildungsoptik auf der vorderen Glasfläche 110 und damit plan zu der mechanischen Systemblende, die die Außenseite 108 des Objektivkörpers 76 ausbildet. Diese Lage der Eintrittspupille 112 ist in Fig. 6 schematisch dargestellt, und sie ermöglicht es, eine singuläre Abschattung von Teilbereichen des Bildsensors 72 durch singuläre Verschmutzungen zu vermeiden.

Insgesamt wird durch die Wirkungskette "Ausrichtung des Bildsensors zu den Bohrungen 100 - Eingreifen der Passzapfen 98 - Verschraubung des Trägerrings 92 mit dem Objektivkörper 76 - Ausrichtung und Fixierung der Kameraeinheit 30 am Montageflansch 78 - Ausrichtung der Aufnahmen 56 zu den Passflächen 42 und Verbindung des Montageteils 32 mit dem Systemkörper 28 über die Passflächen 42" ein Kamerasystem 16 erreicht, bei dem die einzelnen Kameraeinheiten 30 ohne zusätzlichen Justageaufwand sehr präzise zueinander ausgerichtet und montiert werden können, wobei die Genauigkeit der Ausrichtung und Montage im Wesentlichen von den Fertigungstoleranzen des Systemkörpers 28, des Objektivkörpers 76 und des Trägerrings 92 abhängt. Da diese drei Komponenten bevorzugt jeweils durch eine CNC-Bearbeitung mit einer sehr hohen Genauigkeit hergestellt werden, wird eine kostengünstige und darüber hinaus stabile Montage des Kamerasystems 16 erreicht.

## Patentansprüche

1. Kamerasystem zum Überwachen eines Raumbereichs (12), insbesondere zum Absichern einer in dem Raumbereich angeordneten automatisierten Anlage (14), mit zumindest einer Kameraeinheit (30) mit einem Bildsensor (72) und einer Anzahl von Optikelementen (84), die eine Abbildungsoptik darstellen, mit einem Systemkörper (28), der zumindest eine Aufnahme (56) für die Kameraeinheit (30) aufweist, und mit einem Montageteil (32) zum Ausrichten des Systemkörpers (28) relativ zu dem Raumbereich (12), wobei die Optikelemente (84) in einem Objektivkörper (76) angeordnet sind, **dadurch gekennzeichnet, dass** der Objektivkörper (76) einen Montageflansch (78) aufweist, wobei die Kameraeinheit (30) mit Hilfe des Montageflansches (78) in der Aufnahme (56) befestigt ist.

2. Kamerasystem nach Anspruch 1, **dadurch gekennzeichnet, dass** die Kameraeinheit (30) einen Bauteilträger (66) aufweist, auf dem der Bildsensor (72) befestigt ist, wobei der Bauteilträger (66) über zumindest einen konischen Passzapfen (98) an dem Objektivkörper (76) befestigt ist.

3. Kamerasystem nach Anspruch 2, **dadurch gekennzeichnet, dass** der Bildsensor (72) ohne Sensorgehäuse direkt auf den Bauteilträger (66) gebondet ist.

4. Kamerasystem nach Anspruch 2 oder 3, **dadurch gekennzeichnet, dass** der Bauteilträger (66) und der Objektivkörper (76) eine staubdichte Umhäusung (104) für den Bildsensor (72) bilden.

5. Kamerasystem nach einem der Ansprüche 2 bis 4, **gekennzeichnet durch** einen Trägerring (92), an dem der zumindest eine konische Passzapfen (98) angeordnet ist, wobei der Objektivkörper (76) passgenau an dem Trägerring (92) befestigt ist, und zwar vorzugsweise auf den Trägerring (92) aufgeschraubt ist.

6. Kamerasystem nach einem der Ansprüche 1 bis 5, **dadurch gekennzeichnet, dass** der Montageflansch (78) integral an dem Objektivkörper (76) ausgebildet ist.

7. Kamerasystem nach einem der Ansprüche 1 bis 6, **dadurch gekennzeichnet, dass** die Abbildungsoptik eine Eintrittspupille (112) aufweist und dass der Objektivkörper (76) eine vom Bildsensor abgewandte Außenseite (108) besitzt, die in etwa plan zu der Eintrittspupille (112) liegt.

8. Kamerasystem nach einem der Ansprüche 1 bis 7, **dadurch gekennzeichnet, dass** der Systemkörper (28) zumindest zwei Aufnahmen (56a, 56b, 56c) für zumindest eine erste und eine zweite Kameraeinheit (30a, 30b, 30c) aufweist, wobei die zumindest zwei Aufnahmen (56a, 56b, 56c) in einer definierten und vorzugsweise unveränderlichen Position und Ausrichtung zueinander angeordnet sind.

9. Kamerasystem nach einem der Ansprüche 1 bis 8, **dadurch gekennzeichnet, dass** der Systemkörper (28) eine Passaufnahme (38) zur lösbaren Befestigung des Montageteils (32) aufweist.

10. Kamerasystem nach Anspruch 9, **dadurch gekennzeichnet, dass** die Passaufnahme (38) eine Ausnehmung mit einer umlaufenden Innenkante (40) ist, wobei entlang der Innenkante (40) zumindest drei Passflächen (42) angeordnet sind, die in einer definierten Position und Ausrichtung zu der zumindest einen Aufnahme (56) für die Kameraeinheit (30) liegen.

11. Kamerasystem nach einem der Ansprüche 1 bis 10, **dadurch gekennzeichnet, dass** die zumindest eine Aufnahme (56) für die Kameraeinheit (30) integral in dem Systemkörper (28) ausgebildet ist.

## Claims

1. A camera system for monitoring a space area (12), in particular for safeguarding an automated installation (14) arranged in the space area, comprising at least one camera unit (30) having an image sensor (72) and a number of optical elements (84) which form an imaging optics, comprising a system body (28) which has at least one receptacle (56) for the camera unit (30), and comprising a mounting part (32) for aligning the system body (28) relative to the space area (12), with the optical elements (84) being arranged in an objective body (76), **characterized in that** the objective body (76) has a mounting flange (78), and with the camera unit (30) being fastened in the receptacle (56) by means of the mounting flange (78).

2. The camera system of claim 1, **characterized in that** the camera unit (30) has a component carrier (66) on which the image sensor (72) is fastened, with the component carrier (66) being fastened on the objective body (76) via at least one conical aligning pin (98).

3. The camera system of claim 2, **characterized in that** the image sensor (72) is bonded directly onto the component carrier (66) without a sensor housing.

4. The camera system of claim 2 or 3, **characterized in that** the component carrier (66) and the objective body (76) form a dustproof encapsulation (104) for the image sensor (72).

5. The camera system of one of claims 2 to 4, **characterized by** a carrier ring (92) on which the at least one conical aligning pin (98) is arranged, with the objective body (76) being fastened in an accurately fitting fashion on the carrier ring (92), preferably by being screwed onto the carrier ring (92).

6. The camera system of one of claims 1 to 5, **characterized in that** the mounting flange (78) is integrally formed on the objective body (76).

7. The camera system of one of claims 1 to 6, **characterized in that** the imaging optics has an entry pupil (112), and the objective body (76) has an outside (108) facing away from the image sensor and lying substantially planar with the entry pupil (112).

8. The camera system of one of claims 1 to 7, **characterized in that** the system body (28) has at least two receptacles (56a, 56b, 56c) for at least a first and a second camera unit (30a, 30b, 30c), the at least two receptacles (56a, 56b, 56c) being arranged in a defined and preferably invariable position and alignment relative to and with one another.

9. The camera system of one of claims 1 to 8, **characterized in that** the system body (28) has an aligning receptacle (38) for detachably fastening the mounting part (32).

10. The camera system of claim 9, **characterized in that** the aligning receptacle (38) is a cutout with a circumferential inner edge (40), with at least three aligning surfaces (42) being arranged along the inner edge (40), the at least three aligning surfaces (42) lying in a defined position and alignment relative to the at least one receptacle (56) for the camera unit (30).

11. The camera system of one of claims 1 to 10, **characterized in that** the at least one receptacle (56) for the camera unit (30) is integrally formed in the system body (28).

## Revendications

1. Système à caméra pour surveiller une zone d'espace (12), notamment pour sécuriser un équipement automatisé (14) installé dans la zone d'espace, comprenant au moins une unité de caméra (30) munie d'un capteur d'image (72) et d'un certain nombre d'éléments optiques (84), lesquels représentent une optique de représentation, comprenant un corps de système (28) qui présente au moins un logement (56) pour l'unité de caméra (30), et comprenant une pièce de montage (32) pour orienter le corps de système (28) par rapport à la zone d'espace (12), les éléments optiques (84) étant disposés dans un corps d'objectif (76), **caractérisé en ce que** le corps d'objectif (76) présente une bride de montage (78), l'unité de caméra (30) étant fixée dans le logement (56) à l'aide de la bride de montage (78).

2. Système à caméra selon la revendication 1, **caractérisé en ce que** l'unité de caméra (30) présente un porte-composant (66) sur lequel est fixé le capteur d'image (72), le porte-composant (66) étant fixé au corps d'objectif (76) par le biais d'au moins un tourillon d'ajustement conique (98).

3. Système à caméra selon la revendication 2, **caractérisé en ce que** le capteur d'image (72) est fixé directement sur le porte-composant (66) sans boîtier de capteur.

4. Système à caméra selon la revendication 2 ou 3, **caractérisé en ce que** le porte-composant (66) et le corps d'objectif (76) forment une enveloppe (104) hermétique à la poussière pour le capteur d'image (72).

5. Système à caméra selon l'une des revendications 2 à 4, **caractérisé par** une bague porteuse (92) sur laquelle est disposé l'au moins un tourillon d'ajustement conique (98), le corps d'objectif (76) étant fixé avec un ajustement de précision sur la bague porteuse (92), à savoir de préférence vissé sur la bague porteuse (92).

6. Système à caméra selon l'une des revendications 1 à 5, **caractérisé en ce que** la bride de montage (78) est formée en tant qu'élément intégré sur le corps d'objectif (76).

7. Système à caméra selon l'une des revendications 1 à 6, **caractérisé en ce que** l'optique de représentation présente une pupille d'entrée (112) et **en ce que** le corps d'objectif (76) possède un côte extérieur (108) à l'opposé du capteur d'image, lequel côté extérieur est approximativement horizontal par rapport à la pupille d'entrée (112).

8. Système à caméra selon l'une des revendications 1 à 7, **caractérisé en ce que** le corps de système (28) présente au moins deux logements (56a, 56b, 56c) pour au moins une première et une deuxième unité de caméra (30a, 30b, 30c), les au moins deux logements (56a, 56b, 56c étant disposés dans une position et une orientation mutuelles définies et de prèférence non modifiables.

9. Système à caméra selon l'une des revendications 1 à 8, **caractérisé en ce que** le corps de système (28) présente un logement d'ajustement (38) pour la fixation amovible de la pièce de montage (32).

10. Système à caméra selon la revendication 9, **caractérisé en ce que** le logement d'ajustement (38) est un évidement ayant un bord intérieur (40) périphérique, au moins trois surfaces d'ajustement (42) étant disposées le long du bord intérieur (40), lesquelles se trouvent dans une position et une orientation définies par rapport à l'au moins un logement (56) pour l'unité de caméra (30).

11. Système à caméra selon l'une des revendications 1 à 10, **caractérisé en ce que** l'au moins un logement (56) pour l'unité de caméra (30) est formé en tant qu'élément intégré dans le corps de Système (28).
